# EUROPEAN PATENT APPLICATION

(11) **EP 4 847 347 A1**
(43) Date of publication of application: **02.12.2026**
(21) Application number: 24919565.2
(22) Date of filing: 26.04.2024
(51) Int. Cl.: B62D 7/22, G05B 11/42

(54) **STEERING WHEEL VIBRATION SUPPRESSION METHOD FOR ANGLE CONTROL-BASED ASSISTED DRIVING FUNCTION**

(30) Priority: 22.01.2024 CN 202410085869
(71) Applicant: Bosch Huayu Steering Systems (Wuhan) Co., Ltd., Wuhan, Hubei 430208 (CN)
(72) Inventor: XU, Liu, Wuhan, Hubei 430208 (CN); CHEN, Mengmin, Wuhan, Hubei 430208 (CN); LI, Gang, Wuhan, Hubei 430208 (CN); ZHANG, Yu, Wuhan, Hubei 430208 (CN); QU, Guipeng, Wuhan, Hubei 430208 (CN); LONG, Xing, Wuhan, Hubei 430208 (CN); LI, Weier, Wuhan, Hubei 430208 (CN); WAN, Rui, Wuhan, Hubei 430208 (CN); GONG, Cheng, Wuhan, Hubei 430208 (CN)
(74) Representative: Cameron Intellectual Property Ltd
(86) International application number: PCT/CN2024/090049
(87) International publication number: WO 2025/156476

(57) **Abstract**

A steering wheel vibration suppression method for an angle control-based assisted driving function. A steering wheel vibration frequency causing steering wheel vibration is found by means of spectral analysis, a second-order notch filter is used to filter the steering wheel vibration frequency, and angle closed-loop control is performed by using a filtered rack speed; the second-order notch filter and a phase compensator designed on the basis of an optimization formula of the second-order notch filter and a transfer function of the phase compensator are used to perform filtering and phase compensation on an actual vibration amplitude of the rack speed; double closed-loop control is performed on the processed rack speed and a rack position to obtain an expected motor force; the expected motor force is superposed with an actual assistance force to obtain a final motor force, and the final motor force is inputted to a motor to control the motor, thereby implementing vibration suppression. The present disclosure can achieve suppression of steering wheel vibration, improve the control accuracy, reduce the control delay, implement quicker processing of the steering wheel vibration, and improve the steering feel during driving.

## Description

The present disclosure claims priority to Chinese Patent Application No. 2024100858694, filed on January 22, 2024. The contents of the Chinese patent application are incorporated herein by reference in its entireties.

### TECHNICAL FIELD

The present disclosure relates to the technical field of intelligent assisted driving control, and in particular, to a steering wheel vibration suppression method for an angle control-based assisted driving function.

### BACKGROUND

With the development of autonomous driving, an assisted driving function has been widely applied, and serves to assist a driver in driving and improve driving comfort and safety. Lateral control of a vehicle is critical to achieve assisted driving and unmanned driving technologies, an electric power steering (EPS) system is an actuator for the lateral control of the vehicle, and lateral angle control of the EPS system is crucial. For a Level 2 (one of the levels in autonomous driving technology) autonomous driving system, its assisted driving function allows a driver and the assisted driving function to control a vehicle simultaneously, in this case it is also important to have a good steering feel during driving.

Although the angle control-based assisted driving function has precise control, quick responses and good stability, simultaneous action by the assisted driving function and the driver can cause a steering wheel to vibrate, thus impairing driving experience and causing a certain risk of driving.

It can be seen that it is crucial to suppress steering wheel vibration. A conventional strategy for suppressing steering wheel vibration comprises determining the cause of steering wheel vibration after detecting the steering wheel vibration, and then eliminating the steering wheel vibration by controlling a corresponding excitation source or adjusting a transmission path. This measure cannot effectively suppress and eliminate the steering wheel vibration in real time.

Therefore, it is necessary to design a steering wheel vibration suppression method for an angle control-based assisted driving function to achieve real-time and efficient suppression and elimination of steering wheel vibration.

### SUMMARY

An objective of the present disclosure is to overcome the deficiencies of the prior art, a steering wheel vibration suppression method for an angle control-based assisted driving function is provided to achieve real-time and efficient suppression and elimination of steering wheel vibration.

To achieve the above objective, the present disclosure provides a steering wheel vibration suppression method for an angle control-based assisted driving function, comprising the following steps.

Step 1, performing spectral analysis on a fluctuating hand force *T_{TBT}* to find a steering wheel vibration frequency *ωₙ* that causes steering wheel vibration, filtering the steering wheel vibration frequency *ωₙ* by a second-order notch filter, and performing angle closed-loop control by using a filtered rack speed, wherein a formula of the second-order notch filter is ${G}_{notch} \left(s\right) = \frac{{s}^{2} + 2 {dςω}_{0} s + {ω}_{0}^{2}}{{s}^{2} + 2 {ςω}_{0} s + {ω}_{0}^{2}}$, where *d* is a notch depth, *ω*₀ is a notch center frequency, and 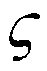 is a damping factor associated with a notch bandwidth *ω_{C}*, and *s* = *ωj* is assumed, where *s* is a complex frequency, *j* is an imaginary unit, and ω is a motor rotor speed, an optimization formula of the second-order notch filter is ${G}_{notch} \left(jω\right) = \frac{{ω}_{0}^{2} - {\left(ω\right)}^{2} + 2 {dςω}_{0} ωj}{{ω}_{0}^{2} - {\left(ω\right)}^{2} + 2 {ςω}_{0} ωj}$, and an amplitude and a phase of the second-order notch filter are calculated as $A = 20 lg \left(\left|{G}_{notch}\left(jω\right)\right|\right) = 20 lg \left(\frac{\sqrt{{\left({ω}_{0}^{2}-{\left(ω\right)}^{2}\right)}^{2} + {\left(2{dςω}_{0}ω\right)}^{2}}}{\sqrt{{\left({ω}_{0}^{2}-{\left(ω\right)}^{2}\right)}^{2} + {\left(2{ςω}_{0}ω\right)}^{2}}}\right)$ and ${φ}_{notch} \left(jω\right) = arctan \left(\frac{2 {dςωω}_{0}}{{ω}_{0}^{2} - {ω}^{2}}\right) - arctan \left(\frac{2 {ςωω}_{0}}{{ω}_{0}^{2} - {ω}^{2}}\right)$,
where A represents an amplitude frequency of the second-order notch filter, and *φ_{notch}*( ) represents a phase frequency of the second-order notch filter.

Step 2, according to the optimization formula of the second-order notch filter, aligning the notch center frequency *ω*₀ with the steering wheel vibration frequency *ωₙ*, and in this case, a maximum attenuation rate in a center frequency band is |*H*(*jωₙ*)| = |*d*|, a center notch depth is *D* = 20lg|*H*(*jω*)| = = 20lg|*d*|, where |*d*| < 1, and a minimum value is taken.
step 3, setting *d* and 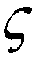 for the second-order notch filter according to $\left\{\begin{matrix}A = 20 lg \left(\left|{G}_{notch}\left(jω\right)\right|\right) = - 3 \\ ω = {ω}_{0} - {ω}_{C}\end{matrix}:ζ=\frac{2 {ω}_{C} \left(2{ω}_{0}-{ω}_{C}\right)}{2 {ω}_{0} \left({ω}_{0}-{ω}_{C}\right) \sqrt{1 - 2 {d}^{2}}}\right.$, where $d ∈ \left(\frac{- \sqrt{2}}{2}, \frac{\sqrt{2}}{2}\right)$ , where *ω_{c}* is a notch bandwidth, a phase margin is *PM* = 180⁰ + *φ*(*jω*), and the phase margin PM > 45°.

In step 4, the delay that results in a phase delay after the introduction of the second-order notch filter is $Δ φ \left(jω\right) = arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right)$.
step 5, making phase compensation for the phase delay by using a phase-lead compensator, wherein a transfer function of the phase compensator is ${G}_{offset} \left(s\right) = \frac{αTs + 1}{Ts + 1}$, where *α >* 1, where *T* is a pole frequency, and *α* is a proportional factor of the compensator, a compensation frequency by the phase compensator satisfies $\frac{1}{αT} < ω < \frac{1}{T}$*, s* = *ωj* is assumed, the transfer function of the phase compensator is optimized as ${G}_{offset} \left(jω\right) = \frac{αTωj + 1}{Tωj + 1}$, where α > 1, a phase frequency of the phase compensator is *φ_{oftset}*(*jω*) = arctan(*αTω*) - arctan(*Tω*), and the second-order notch filter and the phase compensator satisfy $\left\{\begin{matrix}{φ}_{offset} \left(jω\right) + Δ φ \left(jω\right) = 0 \\ 1 + {\left(\left|{G}_{notch}\left(jω\right)\right|\right)}^{2} - {\left(\left|{G}_{offset}\left(jω\right)\right|\right)}^{2} = 2 * \left(\left|{G}_{notch}\left(jω\right)\right|\right) * cos \left({φ}_{offset}\left(jω\right)\right)\end{matrix}\right.$, where $\left|{G}_{notch}\left(jω\right)\right| = \frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}$ and $\left|{G}_{offset}\left(jω\right)\right| = \sqrt{\frac{{\left(αTω\right)}^{2} + 1}{{\left(Tω\right)}^{2} + 1}}$, then: $\left\{\begin{matrix}arctan \left(αTω\right) - arctan \left(Tω\right) + arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right) = 0 \\ 1 + \frac{{\left({ω}_{n}^{2}-{ω}^{2}\right)}^{2} + {\left(2{dςω}_{n}ω\right)}^{2}}{{\left({ω}_{n}^{2}-{ω}^{2}\right)}^{2} + {\left(2{ςω}_{n}ω\right)}^{2}} - \frac{{\left(αTω\right)}^{2} + 1}{{\left(Tω\right)}^{2} + 1} \\ = 2 * \left(\frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}\right) * cos \left(arctan\left(αTω\right)-arctan\left(αTω\right)\right)\end{matrix}\right.$ where $cos \left(arctan\left(αTω\right)-arctan\left(Tω\right)\right) = \frac{1 + {αT}^{2} {ω}^{2}}{\left({\left(αTω\right)}^{2}+1\right) \left({\left(Tω\right)}^{2}+1\right)}$, the phase compensator is designed according to a phase compensator formula $\left\{\begin{matrix}\frac{\left(α-1\right) Tω}{1 + {αT}^{2} {ω}^{2}} = \frac{2 {ςω}_{n} ω \left(d-1\right) \left({ω}_{n}^{2}-{ω}^{2}\right)}{{\left({ω}_{n}^{2}-{ω}^{2}\right)}^{2} + d {\left(2{ςω}_{n}ω\right)}^{2}} \\ \frac{\left({α}^{2}+2α\right) {T}^{2} {ω}^{2} + 3}{1 + {T}^{2} {ω}^{2}} = \frac{2 \left({ω}_{n}^{2}-{ω}^{2}\right) + \left({d}^{2}+1\right) {\left(2{ςω}_{n}ω\right)}^{2}}{{\left({ω}_{n}^{2}-{ω}^{2}\right)}^{2} + d {\left(2{ςω}_{n}ω\right)}^{2}}\end{matrix}\right.$.

Step 6, applying filtering and phase compensation to a jitter of an actual magnetic strip speed by the second-order notch filter and the phase compensator designed respectively by the optimization formula of the second-order notch filter and the transfer function of the phase compensator.

In step 7, double closed-loop control is performed on the processed magnetic strip speed and a magnetic strip position to obtain a desired motor force.
step 8, superposing the desired motor force with an actual assistance force to obtain a final motor force which is input to a motor to control the motor, achieving vibration suppression.

step 7 particularly comprises: a host computer calculating a desired angle of rotation 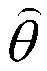 of a steering gear under actual operating conditions, performing outer-loop proportional-integral (PI) control (an automatic control principle) based on a desired magnetic strip position 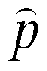 calculated based on a transmission ratio thereof and an actual magnetic strip position *p*, and outputting a desired magnetic strip speed 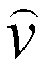 and an actual magnetic strip speed *v*' after a jitter component is removed for inner-loop PI control, so as to obtain a corresponding desired motor force 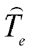 .

The actual magnetic strip speed *v*' after the jitter component is removed is a magnetic strip speed that is processed for the jitter component based on the actual magnetic strip speed *v*.

Compared with the prior art, in the present disclosure, steering wheel vibration is eliminated by controlling a corresponding excitation source or adjusting a transmission path. The steering wheel vibration is suppressed by filtering the magnitude of the steering wheel vibration in the rack speed and then performing angle closed-loop control, the control accuracy is improved, the control delay is reduced and quicker processing of the steering wheel vibration is implemented, and the steering feel during driving is improved.

### BRIEF DESCRIPTION OF THE DRAWINGS

FIG. 1 is a view of an architecture of a system.
FIG. 2 is a mechanical diagram of a motor and a rack of an EPS system.
FIG. 3 is a flowchart according to the present disclosure.
FIG. 4 is Bode diagram of a notch filter according to the present disclosure.
FIG. 5 is a Bode diagram of a phase compensator according to the present disclosure.
FIG. 6 is a block diagram of angle control for suppressing steering wheel vibration according to the present disclosure.
FIG. 7 is a schematic diagram of modules according to the present disclosure.
FIG. 8 is a schematic structural diagram of an electronic device according to the present disclosure.

### DETAILED DESCRIPTION OF THE PREFERRED EMBODIMENT

The present disclosure is now further described below with respect to the accompanying drawings.

### Example 1

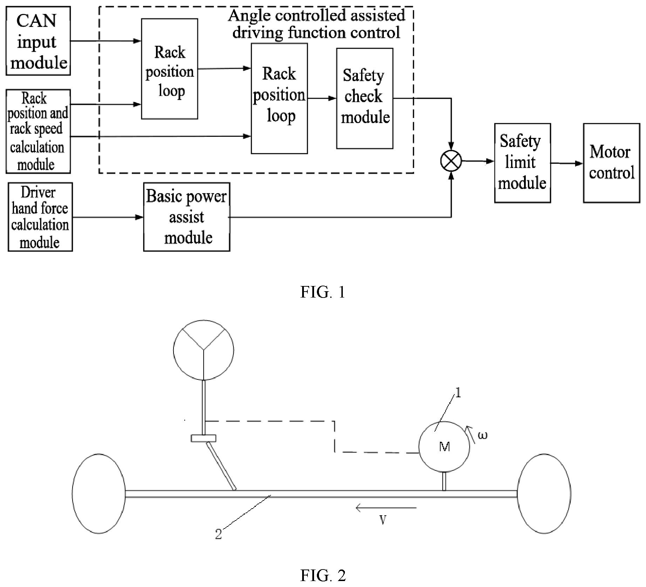

Referring to FIG. 1, under Level 2 autonomous driving conditions, an angle control-based assisted driving function enables a steering system to respond more quickly to a vehicle control request, achieving human-machine co-driving. In this case, a driver hand force and a motor force of the assisted driving function act together, and a driver hand force calculation module transmits the driver hand force through a basic power assist module and a safety limit module to a motor control, and a CAN (a controller area network) input module and a rack position and rack speed calculation module transmit the motor force of the assisted driving function through a rack position loop, a safety check module and the safety limit module to the motor control.

Referring to FIG. 2, in the EPS system, there will be a large fluctuation in the acceleration of a motor rotor when the steering wheel vibrates, which is characterized by the jitter of the rotor speed. A relationship between the speed of rotation of the motor 1 of the EPS and the speed of the rack 2 is defined: V = ω × Kv/2π, where V is the actual rack speed, ω is the motor rotor speed, and Kv is the transmission ratio from a motor end to a rack position. Based on the linear relationship between the rack speed and the motor rotor speed, it is characterized in that the jitter of the motor rotor speed is also reflected by the rack speed, therefore, the problem of the steering wheel vibration can be mitigated well by filtering the magnitude of the steering wheel vibration in the rack speed and then controlling the filtered rack speed.

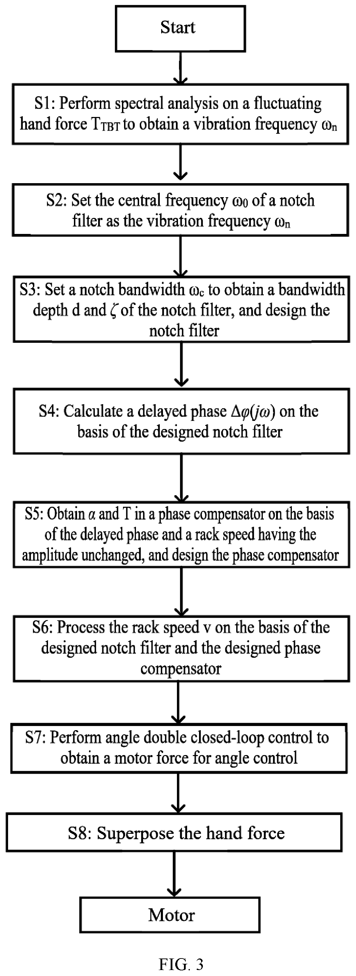

Referring to FIG. 3, the present disclosure provides a steering wheel vibration suppression method for an angle control-based assisted driving function, comprising the following steps.

In step 1, spectral analysis is performed on a fluctuating hand force *T_{TBT}* to find a frequency *ωₙ* that causes steering wheel vibration, the frequency *ωₙ* is filtered by a second-order notch filter, and angle closed-loop control is performed by using a filtered rack speed. A formula of the second-order notch filter is ${G}_{notch} \left(s\right) = \frac{{s}^{2} + 2 {dςω}_{0} s + {ω}_{0}^{2}}{{s}^{2} + 2 {ςω}_{0} s + {ω}_{0}^{2}}$, where *d* is a notch depth, *ω*₀ is a notch center frequency, and 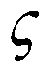 is a damping factor associated with a notch bandwidth *ω_{C}* and can be obtained by means of calculation in step 3.

It can be seen from an amplitude plot of the Bode diagram that a large amplitude attenuation is provided near the notch center frequency *ω*₀, the amplitudes of frequency signals outside a notch band are affected little, but corresponding delays are caused to the phases of the signals in other bands. Assuming *s* = *ωj,* where *s* is a complex frequency, *j* is an imaginary unit, and ω is a motor rotor speed, an optimization formula of the second-order notch filter is ${G}_{notch} \left(jω\right) = \frac{{ω}_{0}^{2} - {\left(ω\right)}^{2} + 2 {dςω}_{0} ωj}{{ω}_{0}^{2} - {\left(ω\right)}^{2} + 2 {ςω}_{0} ωj}$, and an amplitude and a phase of the second-order notch filter are calculated as $A = 20 lg \left(\left|{G}_{notch}\left(jω\right)\right|\right) = 20 lg \left(\frac{\sqrt{{\left({ω}_{0}^{2}-{\left(w\right)}^{2}\right)}^{2} + {\left(2{dςω}_{0}ω\right)}^{2}}}{\sqrt{{\left({ω}_{0}^{2}-{\left(w\right)}^{2}\right)}^{2} + {\left(2{ςω}_{0}ω\right)}^{2}}}\right)$ and ${φ}_{notch} \left(jω\right) = arctan \left(\frac{2 {dςωω}_{0}}{{ω}_{0}^{2} - {ω}^{2}}\right) - arctan \left(\frac{2 {ςωω}_{0}}{{ω}_{0}^{2} - {ω}^{2}}\right)$;
where A represents an amplitude frequency of the second-order notch filter, and *φ_{notch}*( ) represents a phase frequency of the second-order notch filter.

In step 2, according to the optimization formula of the second-order notch filter, the notch center frequency *ω*₀ is aligned with the steering wheel vibration frequency *ωₙ*. In this case, a maximum attenuation rate in a center frequency band is |*H*(*jωₙ*)| = |*d*|, a center notch depth is *D* = 20lg|*H*(*jω*)| = = 20lg|*d*|, where |*d*| *<* 1, and a minimum value is taken to fully filter out the vibration at the center of the vibration frequency.

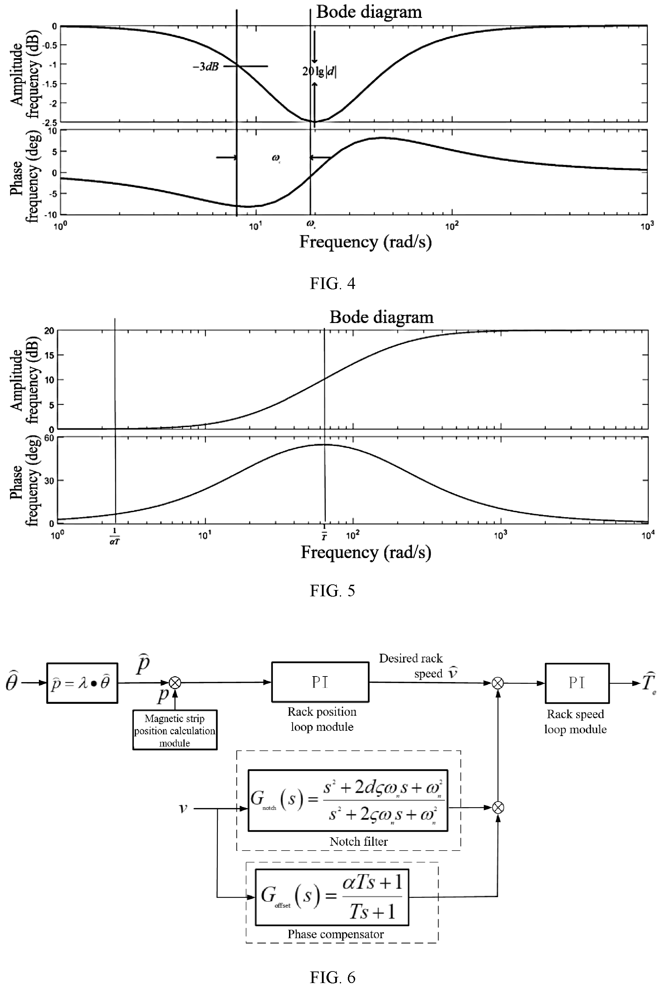

In step 3, an appropriate notch bandwidth *ω_{C}* is set for the notch filter. As shown in FIG. 4, the notch bandwidth is a frequency difference when the bandwidth is attenuated to -3 dB. According to $\left\{\begin{matrix}A = 20 lg \left(\left|{G}_{notch}\left(jω\right)\right|\right) = - 3 \\ ω = {ω}_{0} - {ω}_{C}\end{matrix}\right.$, *d* and 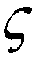 are set for the second-order notch filter: $ς = \frac{2 {ω}_{C} \left(2{ω}_{0}-{ω}_{C}\right)}{2 {ω}_{0} \left({ω}_{0}-{ω}_{C}\right) \sqrt{1 - 2 {d}^{2}}}$, where $d ∈ \left(\frac{- \sqrt{2}}{2}, \frac{\sqrt{2}}{2}\right)$, where *ω_{C}* is a notch bandwidth, a phase margin is *PM* = 180⁰ + *φ*(*jω*), and the phase margin PM > 45°, so as to ensure the stability of the entire system.

In step 4, the delay that results in a phase delay after the introduction of the second-order notch filter is $\left.\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right)$.

In step 5, phase compensation is made for phase delay by using a phase-lead compensator. A transfer function of the phase compensator is ${G}_{offset} \left(s\right) = \frac{αTs + 1}{Ts + 1}$, where *α* > 1, where *T* is a pole frequency, *α* is a proportional factor of the compensator. In this case, the phase compensator added needs to make compensation for the phase delay generated by the second-order notch filter and ensure that the amplitude of the rack speed is controlled to be constant. Referring to FIG. 5, a compensation frequency by the phase compensator satisfies $\frac{1}{αT} < ω < \frac{1}{T}$*.* Assuming *s* = *ωj,* the transfer function of the phase compensator is optimized as ${G}_{offset} \left(jω\right) = \frac{αTωj + 1}{Tωj + 1}$, where α > 1, a phase frequency of the phase compensator is *φ_{offset}*(*jω*) = arctan(*αTω*) - arctan(*Tω*), and the second-order notch filter and the phase compensator satisfy $\left\{\begin{matrix}{φ}_{offset} \left(jω\right) + Δ φ \left(jω\right) = 0 \\ 1 + {\left(\left|{G}_{notch}\left(jω\right)\right|\right)}^{2} - {\left(\left|{G}_{offset}\left(jω\right)\right|\right)}^{2} = 2 * \left(\left|{G}_{notch}\left(jω\right)\right|\right) * cos \left({φ}_{offset}\left(jω\right)\right)\end{matrix}\right.$, where $\left|{G}_{notch}\left(jω\right)\right| = \frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}$ and $\left|{G}_{offset}\left(jω\right)\right| = \sqrt{\frac{{\left(αTω\right)}^{2} + 1}{{\left(Tω\right)}^{2} + 1}}$, then: $\left\{\begin{matrix}arctan \left(αTω\right) - arctan \left(Tω\right) + arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right) = 0 \\ 1 + \frac{{\left({ω}_{n}^{2}-{ω}^{2}\right)}^{2} + {\left(2{dςω}_{n}ω\right)}^{2}}{{\left({ω}_{n}^{2}-{ω}^{2}\right)}^{2} + {\left(2{ςω}_{n}ω\right)}^{2}} - \frac{{\left(αTω\right)}^{2} + 1}{{\left(Tω\right)}^{2} + 1} \\ = 2 * \left(\frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}\right) * cos \left(arctan\left(αTω\right)-arctan\left(αTω\right)\right)\end{matrix}\right.$ where $cos \left(arctan\left(αTω\right)-arctan\left(Tω\right)\right) = \frac{1 + {αT}^{2} {ω}^{2}}{\left({\left(αTω\right)}^{2}+1\right) \left({\left(Tω\right)}^{2}+1\right)}$, the phase compensator is designed according to a phase compensator formula $\left\{\begin{matrix}\frac{\left(α-1\right) Tω}{1 + {αT}^{2} {ω}^{2}} = \frac{2 {ςω}_{n} ω \left(d-1\right) \left({ω}_{n}^{2}-{ω}^{2}\right)}{{\left({ω}_{n}^{2}-{ω}^{2}\right)}^{2} + d {\left(2{ςω}_{n}ω\right)}^{2}} \\ \frac{\left({α}^{2}+2α\right) {T}^{2} {ω}^{2} + 3}{1 + {T}^{2} {ω}^{2}} = \frac{2 \left({ω}_{n}^{2}-{ω}^{2}\right) + \left({d}^{2}+1\right) {\left(2{ςω}_{n}ω\right)}^{2}}{{\left({ω}_{n}^{2}-{ω}^{2}\right)}^{2} + d {\left(2{ςω}_{n}ω\right)}^{2}}\end{matrix}\right.$

In step 6, filtering and phase compensation are applied to a jitter of an actual rack speed by the second-order notch filter and the phase compensator designed respectively by the optimization formula of the second-order notch filter and the transfer function of the phase compensator.

In step 7, double closed-loop control is performed on the processed magnetic strip speed and a magnetic strip position to obtain a desired motor force.

Referring to FIG. 6, specifically, a host computer calculating a desired angle of rotation 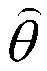 of a steering gear under actual operating conditions, performing outer-loop proportional-integral (PI) control based on a desired magnetic strip position 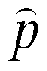 calculated based on a transmission ratio thereof and an actual magnetic strip position *p*, and outputting a desired magnetic strip speed 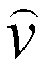 and an actual magnetic strip speed *v*' after a jitter component is removed for inner-loop PI control, so as to obtain a corresponding desired motor force 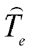 . The actual magnetic strip speed *v'* after the jitter component is removed is a magnetic strip speed that is processed for the jitter component based on the actual magnetic strip speed *v*.
step 8, superposing the desired motor force with an actual assistance force to obtain a final motor force which is input to a motor to control the motor, achieving vibration suppression.

According to the present disclosure, steering wheel vibration is eliminated by controlling a corresponding excitation source or adjusting a transmission path. The steering wheel vibration is suppressed by filtering the magnitude of the steering wheel vibration in the rack speed and then performing angle closed-loop control, the control accuracy is improved, the control delay is reduced and quicker processing of the steering wheel vibration is implemented, and the steering feel during driving is improved.

### Example 2

Corresponding to the foregoing example of the steering wheel vibration suppression method for an angle control-based assisted driving function, the present disclosure further provides an example of a steering wheel vibration suppression system for an angle control-based assisted driving function.

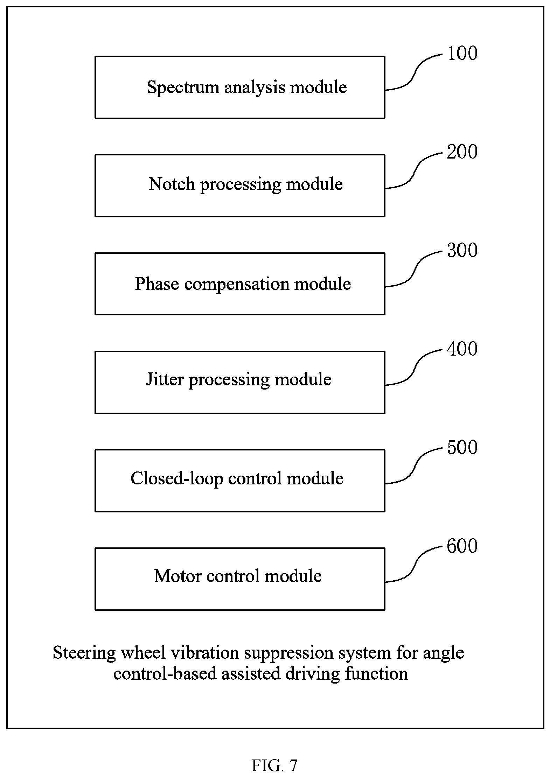

As shown in FIG. 7, the steering wheel vibration suppression system for an angle control-based assisted driving function comprises a spectral analysis module 100, a notch processing module 200, a phase compensation module 300, a jitter processing module 400, a closed-loop control module 500, and a motor control module 600.

The spectral analysis module 100 is configured to perform spectral analysis on a fluctuating hand force *T_{TBT}* to find a steering wheel vibration frequency *ωₙ* that causes steering wheel vibration, filter the steering wheel vibration frequency *ωₙ* by a second-order notch filter, and perform angle closed-loop control by using a filtered rack speed. A formula of the second-order notch filter is ${G}_{notch} \left(s\right) = \frac{{s}^{2} + 2 {dςω}_{0} s + {ω}_{0}^{2}}{{s}^{2} + 2 {ςω}_{0} s + {ω}_{0}^{2}}$, where *d* is a notch depth, *ω*₀ is a notch center frequency, and 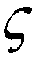 is a damping factor associated with a notch bandwidth *ω_{C}*. Assuming *s* = *ωj*, where *s* is a complex frequency, *j* is an imaginary unit, and ω is a motor rotor speed, an optimization formula of the second-order notch filter is ${G}_{notch} \left(jω\right) = \frac{{ω}_{0}^{2} - {\left(ω\right)}^{2} + 2 {dςω}_{0} ωj}{{ω}_{0}^{2} - {\left(ω\right)}^{2} + 2 {ςω}_{0} ωj}$, and an amplitude and a phase of the second-order notch filter are calculated as $A = 20 lg \left(\left|{G}_{notch}\left(jω\right)\right|\right) = 20 lg \left(\frac{\sqrt{{\left({ω}_{0}^{2}-{\left(ω\right)}^{2}\right)}^{2} + {\left(2{dςω}_{0}ω\right)}^{2}}}{\sqrt{{\left({ω}_{0}^{2}-{\left(ω\right)}^{2}\right)}^{2} + {\left(2{ςω}_{0}ω\right)}^{2}}}\right)$ and ${φ}_{notch} \left(jω\right) = arctan \left(\frac{2 {dςωω}_{0}}{{ω}_{0}^{2} - {ω}^{2}}\right) - arctan \left(\frac{2 {ςωω}_{0}}{{ω}_{0}^{2} - {ω}^{2}}\right)$,
where A represents an amplitude frequency of the second-order notch filter, and *φ_{notch}*( ) represents a phase frequency of the second-order notch filter.

The notch processing module 200 is configured to, according to the optimization formula of the second-order notch filter, align the notch center frequency *ω*₀ with the steering wheel vibration frequency *ωₙ*. In this case, a maximum attenuation rate in a center frequency band is *H*(*jωₙ*) = |*d*|, a center notch depth is *D* = 201g|*H*(*jω*)| = = 201g|*d*|, where |*d*| < 1, and a minimum value is taken.

The notch processing module 200 is further configured to set *d* and 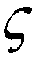 for the second-order notch filter according to $\left\{\begin{matrix}A = 20 lg \left(\left|{G}_{notch}\left(jω\right)\right|\right) = - 3 \\ ω = {ω}_{0} - {ω}_{C}\end{matrix}\right.$: $ς = \frac{2 {ω}_{C} \left(2{ω}_{0}-{ω}_{C}\right)}{2 {ω}_{0} \left({ω}_{0}-{ω}_{C}\right) \sqrt{1 - 2 {d}^{2}}}$, where $d ∈ \left(\frac{- \sqrt{2}}{2}, \frac{\sqrt{2}}{2}\right)$, where *ω_{C}* is a notch bandwidth, a phase margin is *PM* = 180⁰ + *φ*(*jω*), and the phase margin PM > 45°.

The notch processing module 200 is further configured to introduce the second-order notch filter and then generate a delay that results in a phase delay: $Δ φ \left(jω\right) = arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right)$.

The phase compensation module 300 is configured to make phase compensation for the phase delay by using a phase-lead compensator. A transfer function of the phase compensator is ${G}_{offset} \left(s\right) = \frac{αTs + 1}{Ts + 1}$, where *α >* 1, where *T* is a pole frequency, and *α* is a proportional factor of the compensator. A compensation frequency by the phase compensator satisfies $\frac{1}{αT} < ω < \frac{1}{T}$*.* Assuming *s* = *ωj*, the transfer function of the phase compensator is optimized as ${G}_{offset} \left(jω\right) = \frac{αTωj + 1}{Tωj + 1}$, where α > 1, a phase frequency of the phase compensator is *φ_{oftset}*(*jω*) = arctan(*αTω*) - arctan(*Tω*), and the second-order notch filter and the phase compensator satisfy $\left\{\begin{matrix}{φ}_{offset} \left(jω\right) + Δ φ \left(jω\right) = 0 \\ 1 + {\left(\left|{G}_{notch}\left(jω\right)\right|\right)}^{2} - {\left(\left|{G}_{offset}\left(jω\right)\right|\right)}^{2} = 2 * \left(\left|{G}_{notch}\left(jω\right)\right|\right) * cos \left({φ}_{offset}\left(jω\right)\right)\end{matrix}\right.$, where $\left|{G}_{notch}\left(jω\right)\right| = \frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}$ and $\left|{G}_{offset}\left(jω\right)\right| = \sqrt{\frac{{\left(αTω\right)}^{2} + 1}{{\left(Tω\right)}^{2} + 1}}$, then: $\left\{\begin{matrix}arctan \left(αTω\right) - arctan \left(Tω\right) + arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right) = 0 \\ 1 + \frac{{\left({ω}_{n}^{2}-{ω}^{2}\right)}^{2} + {\left(2{dςω}_{n}ω\right)}^{2}}{{\left({ω}_{n}^{2}-{ω}^{2}\right)}^{2} + {\left(2{ςω}_{n}ω\right)}^{2}} - \frac{{\left(αTω\right)}^{2} + 1}{{\left(Tω\right)}^{2} + 1} \\ = 2 * \left(\frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}\right) * cos \left(arctan\left(αTω\right)-arctan\left(αTω\right)\right)\end{matrix}\right.$ , where $cos \left(arctan\left(αTω\right)-arctan\left(Tω\right)\right) = \frac{1 + {αT}^{2} {ω}^{2}}{\left({\left(αTω\right)}^{2}+1\right) \left({\left(Tω\right)}^{2}+1\right)}$, the phase compensator is designed according to a phase compensator formula .

The jitter processing module 400 is configured to apply filtering and phase compensation to a jitter of an actual magnetic strip speed by the second-order notch filter and the phase compensator designed respectively by the optimization formula of the second-order notch filter and the transfer function of the phase compensator.

The closed-loop control module 500 is configured to perform double closed-loop control on the processed magnetic strip speed and a magnetic strip position to obtain a desired motor force.

The motor control module 600 is configured to superimpose the desired motor force with an actual assistance force to obtain a final motor force which is input to the motor to control the motor, achieving vibration suppression.

In a specific implementation, the closed-loop control module 500 is further configured to calculate a desired angle of rotation 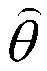 of a steering gear by a host computer under actual operating conditions, perform outer-loop PI control based on a desired magnetic strip position 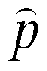 calculated based on a transmission ratio thereof and an actual magnetic strip position *p*, and output a desired magnetic strip speed 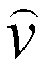 and an actual magnetic strip speed *v*' after a jitter component is removed for inner-loop PI control, so as to obtain a corresponding desired motor force 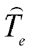 .

In a specific implementation, in the closed-loop control module 500, the actual magnetic strip speed *v*' after the jitter component is removed is a magnetic strip speed that is processed for the jitter component based on the actual magnetic strip speed *v*.

The system example is substantially similar to the method example, so for relevant details, reference can be made to the descriptions of the method example. The system example described above is merely illustrative. The units described as separate components may or may not be physically separated, and the components as units may or may not be physical units, that is, the components may be located in one place, or may be distributed on a plurality of network units. Some or all of the modules may be selected according to actual needs to achieve the objectives of the solutions of the present disclosure.

### Example 3

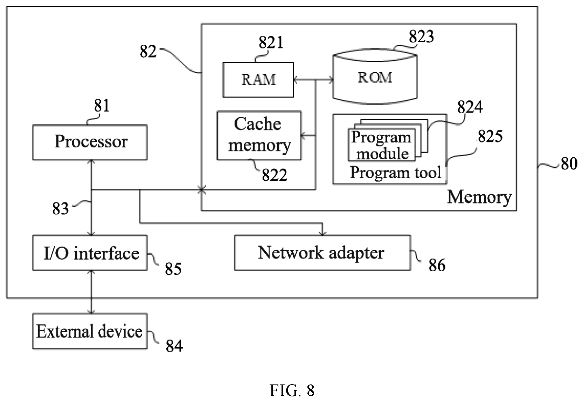

FIG. 8 is a schematic structural diagram of an electronic device according to an exemplary example of the present disclosure. The electronic device comprises a memory, a processor, and a computer program stored in the memory and configured to run on the processor. The computer program, when executed by the processor, causes the processor to implement the steering wheel vibration suppression method for an angle control-based assisted driving function according to any of the above examples. The electronic device 80 shown in FIG. 8 is merely an example and should not impose any limitation on the function and scope of use of the examples of the present disclosure.

As shown in FIG. 8, the electronic device 80 may be represented in the form of a general-purpose computing device, for example, it may be a server device. Components of an electronic device 80 may comprise, but are not limited to: at least one processor 81, at least one memory 82, and a bus 83 connecting different system components (including the memory 82 and the processor 81).

The bus 83 comprises a data bus, an address bus, and a control bus.

The memory 82 may comprise a volatile memory, such as a random access memory (RAM) 821 and/or a cache memory 822, and may further comprise a read-only memory (ROM) 823.

The memory 82 may further comprise a program tool 825 (or utility) having a set of (at least one) program modules 824. Such program modules 824 include, but are not limited to: an operating system, one or more applications, other program modules and program data, and each or a combination of these examples may include an implementation of network environment.

The processor 81 executes various functional applications and data processing, such as the multi-target tracking method according to any of the above examples, by running the computer programs stored in the memory 82.

The electronic device 80 may also communicate with one or more external devices 84 (for example, a keyboard, a pointing device, etc.). This communication can be carried out via an input/output (I/O) interface 85. In addition, the electronic device 80 can also communicate with one or more networks (such as a local area network (LAN), a wide area network (WAN), and/or a public network, such as the Internet) via a network adapter 86. As shown, the network adapter 86 communicates with other modules of the electronic device 80 via the bus 83. It should be understood that, although not shown in the figure, other hardware and/or software modules may be used in combination with the electronic device 80, including but not limited to: microcode, device drives, redundant processors, external disk drive arrays, RAID (disk array) systems, tape drives, data backup storage systems, and the like.

It should be noted that, although a plurality of units/modules or subunits/modules of the electronic device are mentioned in the detailed description above, such a division is exemplary and not mandatory. In practice, according to the implementations of the present disclosure, the features and functions of two or more units/modules described above may be embodied in one unit/module. Conversely, the features and functions of one unit/module described above can be further divided and embodied in a plurality of units/modules.

### Example 4

The example of the present disclosure further provides a computer-readable storage medium having a computer program stored thereon, wherein the computer program, when being executed by a processor, causes the processor to implement the steering wheel vibration suppression method for an angle control-based assisted driving function according to any of the above examples.

The readable storage medium may include, but is not limited to: a portable disk, a hard disk, a random access memory, a read-only memory, an erasable programmable read-only memory, an optical storage, a magnetic storage, or any suitable combination thereof.

### Example 5

The example of the present disclosure further provides a computer program product, comprising a computer program that, when being executed by a processor, causes the processor to implement the steering wheel vibration suppression method for an angle control-based assisted driving function according to any of the above examples.

Program codes for executing the computer program product of the present disclosure may be written in any combination of one or more programming languages, may be entirely or partially executed on a user device, executed as a standalone software package, executed partially on the user device and partially on the remote device or entirely on the remote device.

Although the specific implementations of the present disclosure have been described above, it should be understood by those skilled in the art that these are merely illustrative, and that various changes or modifications can be made to these implementations without departing from the principles and essence of the present disclosure. Accordingly, the scope of protection of the present disclosure is defined by the appended claims.

## Claims

1. A steering wheel vibration suppression method for an angle control-based assisted driving function, **characterized by** comprising:
step 1, performing spectral analysis on a fluctuating hand force *T_{TBT}* to find a steering wheel vibration frequency *ωₙ* that causes steering wheel vibration, filtering the steering wheel vibration frequency *ωₙ* by a second-order notch filter, and performing angle closed-loop control by using a filtered rack speed, wherein a formula of the second-order notch filter is ${G}_{notch} \left(s\right) = \frac{{s}^{2} + 2 {dςω}_{0} s + {ω}_{0}^{2}}{{s}^{2} + 2 {ςω}_{0} s + {ω}_{0}^{2}}$, wherein *d* is a notch depth, *ω*₀ is a notch center frequency, and 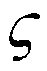 is a damping factor associated with a notch bandwidth *ω_{C}*, and *s* = *ωj* is assumed, wherein *s* is a complex frequency, *j* is an imaginary unit, and ω is a motor rotor speed, an optimization formula of the second-order notch filter is ${G}_{notch} \left(jω\right) = \frac{{ω}_{0}^{2} - {\left(ω\right)}^{2} + 2 {dςω}_{0} ωj}{{ω}_{0}^{2} - {\left(ω\right)}^{2} + 2 {ςω}_{0} ωj}$ , and an amplitude and a phase of the second-order notch filter are calculated as $A = 20 lg \left(\left|{G}_{notch}\left(jω\right)\right|\right) = 20 lg \left(\frac{\sqrt{{\left({ω}_{0}^{2}-{\left(ω\right)}^{2}\right)}^{2} + {\left(2{dςω}_{0}ω\right)}^{2}}}{\sqrt{{\left({ω}_{0}^{2}-{\left(ω\right)}^{2}\right)}^{2} + {\left(2{ςω}_{0}ω\right)}^{2}}}\right)$ and ${φ}_{notch} \left(jω\right) = arctan \left(\frac{2 {dςωω}_{0}}{{ω}_{0}^{2} - {ω}^{2}}\right) - arctan \left(\frac{2 {ςωω}_{0}}{{ω}_{0}^{2} - {ω}^{2}}\right)$,
wherein A represents an amplitude frequency of the second-order notch filter, and *φ_{notch}*( ) represents a phase frequency of the second-order notch filter;
step 2, according to the optimization formula of the second-order notch filter, aligning the notch center frequency *ω*₀ with the steering wheel vibration frequency *ωₙ,* and in this case, a maximum attenuation rate in a center frequency band is |H(*jωₙ*)| = |*d*|, and a center notch depth is *D* = 20lg|(*jω*)| = = 201g|*d*|, wherein |*d*| < 1;
step 3, setting *d* and 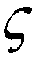 for the second-order notch filter according to $\left\{\begin{matrix}A = 20 lg \left(\left|{G}_{notch}\left(jω\right)\right|\right) = - 3 \\ ω = {ω}_{0} - {ω}_{C}\end{matrix}:ζ=\frac{2 {ω}_{C} \left(2{ω}_{0}-{ω}_{C}\right)}{2 {ω}_{0} \left({ω}_{0}-{ω}_{C}\right) \sqrt{1 - 2 {d}^{2}}}\right.$, wherein $d ∈ \left(\frac{- \sqrt{2}}{2}, \frac{\sqrt{2}}{2}\right)$ , wherein *ω_{C}* is a notch bandwidth, a phase margin is *PM* = 180⁰ + *φ*(*jω*), and the phase margin PM > 45°;
step 4, introducing the second-order notch filter and then generating a delay that results in a phase delay: $Δ φ \left(jω\right) = arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right)$;
step 5, making phase compensation for the phase delay by using a phase-lead compensator, wherein a transfer function of the phase compensator is ${G}_{offset} \left(s\right) = \frac{αTs + 1}{Ts + 1}$, wherein *α >* 1, wherein *T* is a pole frequency, and *α* is a proportional factor of the compensator, a compensation frequency by the phase compensator satisfies $\frac{1}{αT} < ω < \frac{1}{T}$*, s* = *ωj* is assumed, the transfer function of the phase compensator is optimized as ${G}_{offset} \left(jω\right) = \frac{αTωj + 1}{Tωj + 1}$, wherein α > 1, a phase frequency of the phase compensator is *φ_{oftset}*(*jω*)) = arctan(*αTω*) - arctan(*Tω*), and the second-order notch filter and the phase compensator satisfy $\left\{\begin{matrix}{φ}_{offset} \left(jω\right) + Δ φ \left(jω\right) = 0 \\ 1 + {\left(\left|{G}_{notch}\left(jω\right)\right|\right)}^{2} - {\left(\left|{G}_{offset}\left(jω\right)\right|\right)}^{2} = 2 * \left(\left|{G}_{notch}\left(jω\right)\right|\right) * cos \left({φ}_{offset}\left(jω\right)\right)\end{matrix}\right.$, wherein $\left|{G}_{notch}\left(jω\right)\right| = \frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}$ and $\left|{G}_{offset}\left(jω\right)\right| = \sqrt{\frac{{\left(αTω\right)}^{2} + 1}{{\left(Tω\right)}^{2} + 1}}$ , then: $\left\{\begin{matrix}arctan \left(αTω\right) - arctan \left(Tω\right) + arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right) = 0 \\ 1 + \frac{{\left({ω}_{n}^{2}-{ω}^{2}\right)}^{2} + {\left(2{dςω}_{n}ω\right)}^{2}}{{\left({ω}_{n}^{2}-{ω}^{2}\right)}^{2} + {\left(2{ςω}_{n}ω\right)}^{2}} - \frac{{\left(αTω\right)}^{2} + 1}{{\left(Tω\right)}^{2} + 1} \\ = 2 * \left(\frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}\right) * cos \left(arctan\left(αTω\right)-arctan\left(αTω\right)\right)\end{matrix}\right.$ wherein , the phase compensator is designed according to a phase compensator formula ;
step 6, applying filtering and phase compensation to a jitter of an actual magnetic strip speed by the second-order notch filter and the phase compensator designed respectively by the optimization formula of the second-order notch filter and the transfer function of the phase compensator;
step 7, performing double closed-loop control on the processed magnetic strip speed and a magnetic strip position to obtain a desired motor force; and
step 8, superposing the desired motor force with an actual assistance force to obtain a final motor force which is input to a motor to control the motor, achieving vibration suppression.

2. The steering wheel vibration suppression method for an angle control-based assisted driving function according to claim 1, **characterized in that** step 7 particularly comprises: a host computer calculating a desired angle of rotation 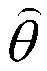 of a steering gear under actual operating conditions, performing outer-loop proportional-integral (PI) control based on a desired magnetic strip position 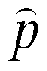 calculated based on a transmission ratio thereof and an actual magnetic strip position *p*, and outputting a desired magnetic strip speed 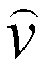 and an actual magnetic strip speed *v*' after a jitter component is removed for inner-loop PI control, so as to obtain a corresponding desired motor force 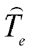 .

3. The steering wheel vibration suppression method for an angle control-based assisted driving function according to claim 2, **characterized in that** the actual magnetic strip speed *v*' after the jitter component is removed is a magnetic strip speed that is processed for the jitter component based on the actual magnetic strip speed *v*.

4. A steering wheel vibration suppression system for an angle control-based assisted driving function, **characterized by** comprising a spectral analysis module, a notch processing module, a phase compensation module, a jitter processing module, a closed-loop control module, and a motor control module, wherein
the spectral analysis module is configured to perform spectral analysis on a fluctuating hand force *T_{TBT}* to find a steering wheel vibration frequency *ωₙ* that causes steering wheel vibration, filter the steering wheel vibration frequency *ωₙ* by a second-order notch filter, and perform angle closed-loop control by using a filtered rack speed, wherein a formula of the second-order notch filter is ${G}_{notch} \left(s\right) = \frac{{s}^{2} + 2 {dςω}_{0} s + {ω}_{0}^{2}}{{s}^{2} + 2 {ςω}_{0} s + {ω}_{0}^{2}}$, wherein *d* is a notch depth, *ω*₀ is a notch center frequency, and 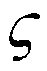 is a damping factor associated with a notch bandwidth *ω_{C}*, and *s* = *ωⱼ* is assumed, wherein *s* is a complex frequency, *j* is an imaginary unit, and ω is a motor rotor speed, an optimization formula of the second-order notch filter is ${G}_{notch} \left(jω\right) = \frac{{ω}_{0}^{2} - {\left(ω\right)}^{2} + 2 {dςω}_{0} ωj}{{ω}_{0}^{2} - {\left(ω\right)}^{2} + 2 {ςω}_{0} ωj}$ , and an amplitude and a phase of the second-order notch filter are calculated as $A = 20 lg \left(\left|{G}_{notch}\left(jω\right)\right|\right) = 20 lg \left(\frac{\sqrt{{\left({ω}_{0}^{2}-{\left(ω\right)}^{2}\right)}^{2} + {\left(2{dςω}_{0}ω\right)}^{2}}}{\sqrt{{\left({ω}_{0}^{2}-{\left(ω\right)}^{2}\right)}^{2} + {\left(2{ςω}_{0}ω\right)}^{2}}}\right)$ and ${φ}_{notch} \left(jω\right) = arctan \left(\frac{2 {dςωω}_{0}}{{ω}_{0}^{2} - {ω}^{2}}\right) - arctan \left(\frac{2 {ςωω}_{0}}{{ω}_{0}^{2} - {ω}^{2}}\right)$,
wherein A represents an amplitude frequency of the second-order notch filter, and *φ_{notch}*( ) represents a phase frequency of the second-order notch filter;
the notch processing module is configured to, according to the optimization formula of the second-order notch filter, align the notch center frequency *ω*₀ with the steering wheel vibration frequency *ωₙ*, and in this case, a maximum attenuation rate in a center frequency band is |*H*(*jωₙ*) = |*d*|, and a center notch depth is *D =* 201g|*H*(*jw*) *=* = 201g|*d*|, wherein |*d*| *<* 1;
the notch processing module is further configured to set *d* and 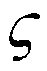 for the second-order notch filter according to $\left\{\begin{matrix}A = 20 lg \left(\left|{G}_{notch}\left(jω\right)\right|\right) = - 3 \\ ω = {ω}_{0} - {ω}_{C}\end{matrix}\right. ς = \frac{2 {ω}_{C} \left(2{ω}_{0}-{ω}_{C}\right)}{2 {ω}_{0} \left({ω}_{0}-{ω}_{C}\right) \sqrt{1 - 2 {d}^{2}}}$, $d ∈ \left(\frac{- \sqrt{2}}{2}, \frac{\sqrt{2}}{2}\right)$ , wherein *ω_{C}* is a notch bandwidth, a phase margin is *PM* = 180⁰ + *φ*(*jω*)), and the phase margin PM > 45°;
the notch processing module is further configured to introduce the second-order notch filter and then generate a delay that results in a phase delay: $Δ φ \left(jω\right) = arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right)$;
the phase compensation module is configured to make phase compensation for the phase delay by using a phase-lead compensator, wherein a transfer function of the phase compensator is ${G}_{offset} \left(s\right) = \frac{αTs + 1}{Ts + 1}$, wherein *α >* 1, wherein *T* is a pole frequency, and *α* is a proportional factor of the compensator, a compensation frequency by the phase compensator satisfies $\frac{1}{αT} < ω < \frac{1}{T}$*, s = ωj* is assumed, the transfer function of the phase compensator is optimized as ${G}_{offset} \left(jω\right) = \frac{αTωj + 1}{Tωj + 1}$, wherein α > 1, a phase frequency of the phase compensator is *φ_{offset}*(*jω*) = arctan(*α*Tω)- arctan(Tω), and the second-order notch filter and the phase compensator satisfy $\left\{\begin{matrix}{φ}_{offset} \left(jω\right) + Δ φ \left(jω\right) = 0 \\ 1 + {\left(\left|{G}_{notch}\left(jω\right)\right|\right)}^{2} - {\left(\left|{G}_{offset}\left(jω\right)\right|\right)}^{2} = 2 * \left(\left|{G}_{notch}\left(jω\right)\right|\right) * cos \left({φ}_{offset}\left(jω\right)\right)\end{matrix}\right.$, wherein $\left|{G}_{notch}\left(jω\right)\right| = \frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}$ and $\left|{G}_{offset}\left(jω\right)\right| = \sqrt{\frac{{\left(αTω\right)}^{2} + 1}{{\left(Tω\right)}^{2} + 1}}$, then: $\left\{\begin{matrix}arctan \left(αTω\right) - arctan \left(Tω\right) + arctan \left(\frac{2 {ςωω}_{n}}{{ω}_{n}^{2} - {ω}^{2}}\right) - arctan \left(\frac{2 {dςωω}_{n}}{{ω}_{n}^{2} - {ω}^{2}}\right) = 0 \\ 1 + \frac{{\left({ω}_{n}^{2}-{ω}^{2}\right)}^{2} + {\left(2{dςω}_{n}ω\right)}^{2}}{{\left({ω}_{n}^{2}-{ω}^{2}\right)}^{2} + {\left(2{ςω}_{n}ω\right)}^{2}} - \frac{{\left(αTω\right)}^{2} + 1}{{\left(Tω\right)}^{2} + 1} \\ = 2 * \left(\frac{\sqrt{{\left({ω}_{n}^{2}-{\left(ω\right)}^{2}\right)}^{2} + {\left(2{dςω}_{n}ω\right)}^{2}}}{\sqrt{{\left({ω}_{n}^{2}-{\left(ω\right)}^{2}\right)}^{2} + {\left(2{ςω}_{n}ω\right)}^{2}}}\right) * cos \left(arctan\left(αTω\right)-arctan\left(αTω\right)\right)\end{matrix}\right.$, wherein $cos \left(arctan\left(αTω\right)-arctan\left(Tω\right)\right) = \frac{1 + {αT}^{2} {ω}^{2}}{\left({\left(αTω\right)}^{2}+1\right) \left({\left(Tω\right)}^{2}+1\right)}$, the phase compensator is designed according to a phase compensator formula $\left\{\begin{matrix}\frac{\left(α-1\right) Tω}{1 + {αT}^{2} {ω}^{2}} = \frac{2 {ςω}_{n} ω \left(d-1\right) \left({ω}_{n}^{2}-{ω}^{2}\right)}{{\left({ω}_{n}^{2}-{ω}^{2}\right)}^{2} + d {\left(2{ςω}_{n}ω\right)}^{2}} \\ \frac{\left({α}^{2}+2α\right) {T}^{2} {ω}^{2} + 3}{1 + {T}^{2} {ω}^{2}} = \frac{2 \left({ω}_{n}^{2}-{ω}^{2}\right) + \left({d}^{2}+1\right) {\left(2{ςω}_{n}ω\right)}^{2}}{{\left({ω}_{n}^{2}-{ω}^{2}\right)}^{2} + d {\left(2{ςω}_{n}ω\right)}^{2}}\end{matrix}\right.$;
the jitter processing module is configured to apply filtering and phase compensation to a jitter of an actual magnetic strip speed by the second-order notch filter and the phase compensator designed respectively by the optimization formula of the second-order notch filter and the transfer function of the phase compensator;
the closed-loop control module is configured to perform double closed-loop control on the processed magnetic strip speed and a magnetic strip position to obtain a desired motor force; and
the motor control module is configured to superimpose the desired motor force with an actual assistance force to obtain a final motor force which is input to the motor to control the motor, achieving vibration suppression.

5. The steering wheel vibration suppression system for an angle control-based assisted driving function according to claim 4, **characterized in that** the closed-loop control module is further configured to calculate a desired angle of rotation 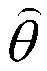 of a steering gear by a host computer under actual operating conditions, perform outer-loop PI control based on a desired magnetic strip position 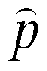 calculated based on a transmission ratio thereof and an actual magnetic strip position *p*, and output a desired magnetic strip speed 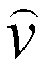 and an actual magnetic strip speed *v*' after a jitter component is removed for inner-loop PI control, so as to obtain a corresponding desired motor force 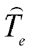 .

6. The steering wheel vibration suppression system for an angle control-based assisted driving function according to claim 5, **characterized in that** the actual magnetic strip speed *v'* after the jitter component is removed is a magnetic strip speed that is processed for the jitter component based on the actual magnetic strip speed *v* .

7. An electronic device, **characterized by** comprising a memory, a processor, and a computer program stored in the memory and configured to run on the processor, wherein the computer program, when being executed by the processor, causes the processor to implement the steering wheel vibration suppression method for an angle control-based assisted driving function according to any one of claims 1-3.

8. A computer-readable storage medium having a computer program stored thereon, **characterized in that** the computer program, when being executed by a processor, causes the processor to implement the steering wheel vibration suppression method for an angle control-based assisted driving function according to any one of claims 1-3.

9. A computer program product comprising a computer program, wherein the computer program, when being executed by a processor, causing the processor to implement the steering wheel vibration suppression method for an angle control-based assisted driving function according to any one of claims 1-3.
